# FASCICULE DE BREVET EUROPEEN

(11) **EP 3 653 448 B1**
(45) Date de publication et mention de la délivrance du brevet: **13.10.2021**
(21) Numéro de dépôt: 19209849.9
(22) Date de dépôt: 18.11.2019
(51) Int. Cl.: B60R 19/52, B60R 21/34

(54) **DISPOSITIF DE FIXATION POUR ZONES CRITIQUES POUR UN VÉHICULE**
BEFESTIGUNGSVORRICHTUNG FÜR KRITISCHE STELLEN FÜR EIN FAHRZEUG
ATTACHMENT DEVICE FOR CRITICAL AREAS FOR A VEHICLE

(30) Priorité: 19.11.2018 FR 1871591
(43) Date de publication de la demande: 20.05.2020
(73) Titulaire: Compagnie Plastic Omnium, 69007 Lyon (FR)
(72) Inventeur: MORESSEE, Aurélien, 01150 Sainte-Julie (FR); UTTER, Jérôme, 01150 Sainte-Julie (FR); MAZUE, Bertrand, 01150 Sainte-Julie (FR)
(74) Mandataire: LLR

(56) Documents cités:
- WO-A1-2006/087439
- WO-A2-2008/040891
- JP-A- 2002 195 225
- US-A- 3 792 889

## Description

La présente invention concerne le domaine des pièces de carrosserie des véhicules automobile. L'invention traite plus précisément de l'intégration de dispositifs techniques à valeur ajoutée pour les performances du véhicule, au plus proche de ces pièces de carrosserie.

Il est connu d'intégrer des dispositifs de véhicule, tels que des volets aérodynamiques, radars, lidars, caméras, capteurs, *etc,* au sein des modules de carrosserie des véhicules automobile. De tels dispositifs de véhicule sont généralement agencés sur une partie structurelle du véhicule telle que, dans le cas de l'avant du véhicule, la face avant technique ou les traverses horizontales et verticales, ce qui implique parfois un positionnement assez éloigné par rapport aux zones critiques aux chocs piétons et chocs basse vitesse des pièces de carrosserie. Un tel positionnement implique de référencer ces dispositifs non pas dans le module de carrosserie mais dans le module antichocs. Le positionnement d'un dispositif par rapport à la pièce de carrosserie est de ce fait moins bien contrôlé, notamment dans le cas d'un choc engendrant un déplacement relatif entre le dispositif et la pièce de carrosserie. Les interfaces et les tolérances entre les différents systèmes impliqués dans le module avant de la voiture sont, de ce fait, moins bien maîtrisées.

US 3 792 889 divulgue un dispositif de véhicule automobile comprenant un système d'assemblage écrou/boulon de fixation à une pièce du véhicule automobile. Le système de fixation comprend une bride de fixation avec un orifice, un organe de guidage et une surface d'appui participant au maintien de l'organe de guidage dans une position, une partie élastiquement déformable exerçant une force de rappel apte à rappeler l'organe de guidage dans la position. L' extrémité du boulon pénètre en tout temps dans l'orifice, quelle que soit la force subie par le dispositif et même lorsque ce dernier ne subit aucune force.

Ces dispositifs peuvent toutefois être directement intégrés au sein des pièces de carrosserie, au niveau des zones non critiques aux chocs piétons et chocs basse vitesse.

Cependant, pour des raisons stylistiques, fonctionnelles et aérodynamiques, les constructeurs automobiles tendent à imposer le positionnement de ces dispositifs de véhicule au plus près des pièces de carrosserie, au niveau des zones critiques aux chocs piétons et chocs basse vitesse.

Pour ce faire, il a été envisagé de fixer les dispositifs de véhicules directement sur la pièce de carrosserie, dans les zones critiques, par l'intermédiaire de liaisons solidaires, telles que par vissage, collage ou soudage. Or, une telle solution présente le désavantage d'endommager le dispositif lorsque des chocs piétons et des chocs basse vitesse sont subis dans la zone critique de la pièce de carrosserie. Par conséquent, il existe de grands risques que le dispositif ne fonctionne plus correctement après un choc, ce qui ne représente pas une solution acceptable. En effet, selon les nouvelles réglementations, les dispositifs doivent rester entièrement fonctionnels après un impact basse vitesse et respecter l'équipement de protection pédestre.

Afin de répondre à un tel problème, il a été envisagé de connecter le dispositif directement sur la pièce de carrosserie, dans les zones critiques, par l'intermédiaire de liaisons fusibles. Cette solution, qui permet de préserver l'intégrité du dispositif en cas de chocs piétons et de chocs basse vitesse subis par la pièce de carrosserie, présente le désavantage de requérir une intervention manuelle systématique pour repositionner le dispositif, dès lors que la liaison est rompue. Cette solution n'est donc pas non plus acceptable.

L'invention a pour but de remédier à ces inconvénients en fournissant un dispositif de véhicule automobile comprenant un système de fixation à une pièce du véhicule automobile, le système de fixation comprenant :
- au moins une bride de fixation, la bride de fixation comprenant une première portion présentant au moins un orifice,
- au moins un organe de guidage faisant saillie en regard de l'orifice selon un axe sensiblement orthogonal à ladite première portion, l'organe de guidage comprenant au moins un organe d'appui contre une première face de ladite première portion participant au maintien de l'organe de guidage dans une première position, l'organe d'appui étant apte à pénétrer dans l'orifice lorsqu'une force subie par le dispositif a une intensité supérieure à une valeur seuil, la force ayant une direction sensiblement parallèle à l'axe,
- au moins une surface d'appui participant au maintien de l'organe de guidage dans ladite première position,
- au moins une partie élastiquement déformable exerçant une force de rappel apte à rappeler l'organe de guidage dans ladite première position.

Ainsi, le dispositif de l'invention peut être assemblé directement sur une pièce de carrosserie, au sein d'une zone critique pour les chocs piétons et les chocs basse vitesse, sans risque d'endommagement du dispositif et sans nécessité d'interventions manuelles, ultérieures au choc, pour repositionner le dispositif.

En effet, le dispositif est prévu pour être maintenu au plus proche d'une pièce de carrosserie, dans une position courante qui correspond à la première position de l'organe de guidage. Lorsque l'intensité des différentes forces subies par le dispositif ne dépasse pas une valeur seuil prédéterminée, valeur seuil en dessous de laquelle le dispositif et ses prestations ne sont pas détériorés par ces forces subies, l'organe d'appui participant à maintenir l'organe de guidage dans la première position. Ainsi, le dispositif dans son ensemble demeure dans une position sensiblement immobile.

Dans la suite de la description, on entend par « position immobile » ou « partie immobile d'un élément », la position ou la partie de l'élément considérée en référence à un organe du véhicule connu pour rester sensiblement immobile au sein du véhicule assemblé, et ce, tout au long de la vie du véhicule, un tel organe étant, par exemple, la caisse en blanc du véhicule.

Dans la suite de la description, on entend par l'expression « surface d'appui », la surface d'appui contre laquelle prend appui un élément du dispositif de l'invention différent de l'organe d'appui. Autrement dit, la surface d'appui est une surface distincte de la première face de la première portion de la bride de fixation. La surface d'appui selon l'invention peut être de deux types, à savoir un type « située en regard de la première face » et un type « permettant l'appui d'un organe de clippage ». Ces deux types sont détaillés par la suite.

Dès qu'un choc piéton ou qu'un choc basse vitesse engendre une force ayant une direction sensiblement parallèle à l'axe de l'organe de guidage et une intensité dont la valeur dépasse celle de la valeur seuil prédéterminée, l'organe d'appui est agencé pour pénétrer dans l'orifice de la bride de fixation.

Lorsque l'organe d'appui pénètre dans l'orifice présent dans la première portion de la bride de fixation, il entraine dans sa course le reste de l'organe de guidage, dont une autre portion pénètre également dans l'orifice. Ce mouvement généralisé de l'organe de guidage implique un déplacement, le long de l'axe de l'organe de guidage, d'une partie mobile du dispositif, en référence à une partie de la bride de fixation agencée pour rester dans une position immobile (ci-après appelée « partie fixe de la bride de fixation »). Cette partie mobile du dispositif comprend notamment l'organe de guidage et les organes fonctionnels du dispositif qu'il est nécessaire de prémunir contre des chocs trop violents.

Un tel déplacement de la partie mobile du dispositif s'opère jusqu'à une position de fin de course de l'organe de guidage. Une telle position correspond à une position extrême au-delà de laquelle la partie mobile du dispositif ne peut pas être déplacée. Une telle position est choisie de sorte que l'intensité de la force engendrée par le choc ait été suffisamment absorbée pour que le dispositif ne soit pas endommagé. Autrement dit, la partie mobile du dispositif peut être déplacée depuis une première position, dans laquelle elle est maintenue immobile, vers une position de fin de course de laquelle elle est rappelée pour retourner dans la première position. Lorsque la position de fin de course est atteinte, la force de rappel de la partie élastiquement déformable du dispositif est suffisante pour amorcer un déplacement de la partie mobile du dispositif, dans le sens opposé, et ce, jusqu'à ce que l'organe de guidage soit rappelé dans sa première position initiale. Ainsi, durant l'impact, le dispositif est préservé contre toute détérioration, et, après l'impact, le dispositif est repositionné dans sa position fonctionnelle, et ce, sans qu'aucune intervention de manutention ne soit nécessaire. La force de rappel de la partie élastiquement déformable est suffisante pour, d'une part, replacer la partie mobile du dispositif dans sa première position initiale après l'impact, et d'autre part résister aux forces aérodynamiques et vibratoires exercées en cours de roulage. Autrement dit, la partie élastiquement déformable du dispositif participe également au maintien de l'organe de guidage dans la première position.

Avantageusement, la surface d'appui est en regard de ladite première face.

Ainsi, lorsque l'organe de guidage se trouve dans la première position, ce dernier est contraint entre la première face de la première portion de la bride de fixation et ladite surface d'appui. Dès lors, en combinaison avec la partie élastiquement déformable du système de fixation, l'organe de guidage, et par extension la partie mobile du dispositif, est maintenu dans une position immobile de laquelle il sort uniquement lorsque l'intensité de la force subie par le dispositif dépasse la valeur seuil prédéterminée.

La surface d'appui contre laquelle l'organe de guidage prend appui dans la première position peut être une portion de la surface de la pièce de carrosserie qui est située en regard de la première portion de la bride de fixation.

Alternativement, ladite surface d'appui peut être une extension de la partie fixe de la bride fixation, une telle extension étant également située en regard de sa première portion. Ainsi, la bride de fixation présente sur deux côtés opposés, des zones de contact avec l'organe de guidage. Dans cette variante de l'invention, le déplacement de l'organe de guidage est limité par ces deux côtés opposés de la bride de fixation, dont la partie fixe présente alors une forme en U. Dès lors, le maintien de l'organe de guidage dans la première position est mieux maitrisé. En effet, cette configuration en forme de U de la bride de fixation permet un maintien immobile de l'organe de guidage dans la première position, qui n'est dépendante que d'un seul élément, en l'occurrence la partie fixe de la bride de fixation.

Avantageusement, la surface d'appui est une deuxième face de ladite première portion, le dispositif et le dispositif comprend au moins un organe de clippage à ladite deuxième face participant au maintien de l'organe de guidage dans la première position.

Ainsi, le maintien de l'organe de guidage dans la première position peut également être sécurisé grâce à un ou plusieurs organes de clippage. Un tel organe de clippage est agencé pour prendre appui sur la deuxième face de la première portion qui correspond la face opposée à la première face contre laquelle est contraint l'organe d'appui, dans la première position. Ainsi, en combinaison avec la partie élastiquement déformable, un tel organe de clippage permet le maintien de l'organe de guidage dans la première position, sans qu'une surface d'appui du type « située en regard de la première face » soit nécessaire.

Toutefois, il est également un mode de réalisation de l'invention dans lequel le dispositif est pourvu à la fois d'une surface d'appui du type « située en regard de la première face » et d'une surface d'appui du type « permettant l'appui d'un organe de clippage ». En d'autres termes, le dispositif de l'invention selon ce mode de réalisation comprend au moins deux surfaces d'appui et des organes de clippage. Dans ce mode de réalisation, le maintien de l'organe de guidage dans la première position est davantage sécurisé.

Avantageusement, l'organe d'appui comprend au moins un chanfrein.

Ainsi, l'organe d'appui présente une forme plus adaptée pour permettre son glissement vers l'entrée de l'orifice de la bride de fixation, lorsque l'intensité de la force subie par le dispositif dépasse la valeur seuil. Une telle caractéristique avantageuse permet de prévoir la pénétration de l'organe d'appui avec une plus grande précision. Par conséquent, le déplacement de l'organe de guidage et, par extension, de l'ensemble de la partie mobile de dispositif peut également être planifié avec une plus grande précision. Les risques de détérioration du dispositif en sont, par conséquent, réduits.

Avantageusement, la bride de fixation comprend au moins un chanfrein, de préférence situé dans la zone périphérique de l'orifice contre laquelle est maintenu l'organe d'appui, lorsque l'organe de guidage est dans la première position.

Ainsi, il est également possible de prévoir la pénétration de l'organe d'appui avec une précision accrue.

Afin de favoriser la pénétration de l'organe d'appui dans l'orifice, lorsque l'intensité de la force subie par le dispositif dépasse la valeur seuil, l'organe de guidage peut être réalisé, au moins partiellement, à partir d'un matériau présentant des propriétés de raideur permettant de favoriser le glissement de l'organe d'appui dans l'entrée de l'orifice. Autrement dit, au moins une partie de l'organe de guidage peut être capable d'être élastiquement déformée de sorte à permettre ou accompagner le glissement entre l'organe d'appui et la première face de la première portion de la bride de fixation. Une telle partie élastiquement déformable de l'organe de guidage peut, par exemple, être l'organe d'appui lui-même qui, sous l'augmentation de la force subie par le dispositif, est comprimé avec plus d'intensité contre la première face et se déforme. Une telle partie élastiquement déformable peut également être la portion étrécie.

La bride de fixation peut également présenter des propriétés permettant de favoriser le glissement de l'organe d'appui dans l'entrée de l'orifice. Elle peut par exemple comprendre une zone périphérique à l'orifice qui présente des propriétés de raideurs lui permettant de se déformer lorsque l'organe d'appui exerce une pression trop importante sur cette dernière.

Avantageusement, le dispositif comprend au moins une butée de fin de course de l'organe de guidage.

Il est ainsi possible de limiter le déplacement de l'organe de guidage, selon son axe longitudinal, entre deux positions extrêmes, à savoir la première position et la position de fin de course. Ce faisant, il est possible d'éviter un déplacement trop conséquent de l'organe de guidage qui pourrait entrainer une collision entre la partie mobile du dispositif et un élément de l'environnement proche du véhicule. Une telle butée peut notamment être agencée sur la partie fixe de la bride de fixation, plus précisément sur sa première portion et faire saillie depuis sa première face en direction de l'organe de guidage. En variante, elle peut être prévue sur la partie mobile du dispositif, par exemple sur l'organe de guidage, et faire saillie depuis cette dernière en direction de la première portion de la bride de fixation. Dans une autre variante, le dispositif peut comprendre au moins deux butées de fin de course de l'organe de guidage, l'une d'entre elle étant agencée sur la première portion de la bride de fixation et faisant saillie depuis sa première face en direction de l'organe de guidage et l'autre étant agencée sur la partie mobile du dispositif et faisant saillie depuis cette dernière en direction de la première portion de la bride de fixation. Avantageusement, ces deux butées sont situées en regard l'une de l'autre afin de rentrer en contact, l'une avec l'autre, et ainsi déterminer la position de fin de course de l'organe de guidage.

Avantageusement, l'organe de guidage comprend au moins une portion étrécie depuis l'organe d'appui.

Ainsi, la force de rappel exercée par la partie élastiquement déformable sur l'organe de guidage est localement compensée plus fortement. En effet, compte tenu de la présence et du dimensionnement de cette portion étrécie, des forces de frottement s'appliquent localement entre l'organe de guidage et la paroi de l'orifice et sont plus importantes à mesure que l'organe de guidage est rappelé dans la première position. Par conséquent, ce retour est maitrisé et s'opère plus lentement, ce qui favorise un retour en douceur dans la première position, sans risque d'endommagement du dispositif ou de la pièce de carrosserie. Ainsi, il est possible de s'affranchir des risques que peut engendrer une force de rappel non maitrisée de l'organe de guidage, par exemple un mauvais positionnement du dispositif ou une détérioration de ce dernier.

Avantageusement, la partie élastiquement déformable comprend un ressort.

Ce ressort peut être disposé entre la bride de fixation et la base de l'organe de guidage afin, notamment, de participer au maintien de la partie mobile du dispositif dans la première position, en exerçant une force de compression sur l'organe de guidage.

Avantageusement, la partie élastiquement déformable comprend une patte de la bride de fixation.

Une telle patte de la bride de fixation peut être utilisée cumulativement ou en remplacement du ressort précédemment mentionné. Une telle patte fait partie d'une portion de la bride de fixation qui est distincte de sa partie fixe. En effet, une telle patte présente les propriétés lui permettant, à la fois, d'exercer une force de compression sur une partie mobile du dispositif, afin de participer à son maintien immobile dans la première position, de se déformer lorsque l'intensité de la force subie par le dispositif dépasse la valeur seuil et de participer au rappel de la partie mobile du dispositif dans la première position.

Avantageusement, le dispositif de véhicule automobile comprend un capteur apte à détecter un retour de l'organe de guidage dans la première position.

Ainsi, il est possible de confirmer électroniquement, d'une manière directe, le bon retour de l'organe de guidage dans la première position. Un tel capteur peut être de tout type de capteur qui permet de détecter un élément dans une position prédéterminée. Un tel capteur est programmé, dans le dispositif selon l'invention, pour confirmer la position de l'organe de guidage dans la première position. Un tel capteur peut, par exemple, être un capteur de position, un capteur optique, un capteur ultrasonique, *etc.*

Par ailleurs, il est également possible de confirmer ce bon positionnement retour, d'une manière indirecte, en se référant au bon fonctionnement d'un organe fonctionnel pouvant être présent au sein du dispositif de l'invention. En effet, le dispositif de l'invention peut comprendre, dans sa partie dite mobile, des organes fonctionnels tels que des radars, des lidars ou encore des capteurs optiques. Le bon fonctionnement de ces organes dépend de leur bonne position au sein du véhicule. A titre d'exemple, le dispositif peut comprendre un radar ou un lidar dont le mauvais repositionnement à la première position initiale, après un choc, peut être détecté via un message d'erreur ou via l'impossibilité d'assurer leur fonction. Une telle détermination indirecte peut être utilisée en substitution d'une détermination directe, réalisée par un capteur dédié à cet effet, mais également en supplément de ce dernier. Cette dernière variante permet d'avoir une double vérification du bon retour à la première position et, le cas échéant, de diagnostiquer le mauvais fonctionnement du capteur dédié ou de l'organe fonctionnel.

L'invention a aussi pour objet un ensemble d'une pièce de carrosserie et d'un dispositif de véhicule automobile selon l'un quelconque, ou l'une quelconque des combinaisons compatibles, des modes de réalisation précédemment présentés, ensemble dans lequel la surface d'appui est une portion de la surface de la pièce de carrosserie située en regard de la première portion de la bride de fixation.

Avantageusement, la bride de fixation est solidaire de la pièce de carrosserie.

Avantageusement, la pièce de carrosserie est une pièce structurelle de véhicule automobile, la pièce structurelle étant de préférence choisie parmi la liste constituée de : un pare-chocs, un ouvrant, une calandre.

### Brève description des figures

L'invention sera mieux comprise à la lecture des figures annexées, qui sont fournies à titre d'exemples et ne présentent aucun caractère limitatif, dans lesquelles :
[Fig. 1] est une vue en perspective d'une face avant d'un véhicule automobile,
[Fig. 2] est une vue en perspective d'éléments constitutifs d'un même dispositif de l'invention selon un premier mode de réalisation,
[Fig. 3] est une vue en perspective d'éléments constitutifs d'un même dispositif de l'invention selon un premier mode de réalisation,
[Fig. 4] est une vue en perspective d'un agrandissement de la zone en pointillée de la figure 3,
[Fig. 5] est une vue en coupe selon le plan V-V de la figure 4 représentant un organe de guidage et une partie du corps principal d'un dispositif selon le premier mode de réalisation,
[Fig. 6] est une vue en coupe d'une partie d'un dispositif selon le premier mode de réalisation de l'invention,
[Fig. 7] est une vue en coupe d'une partie d'un dispositif selon le premier mode de réalisation de l'invention,
[Fig. 8] est une vue en coupe d'une partie d'un dispositif selon un deuxième mode de réalisation de l'invention,
[Fig. 9] est une vue en coupe d'une partie d'un dispositif selon un deuxième mode de réalisation de l'invention,
[Fig. 10] est une vue en coupe d'une partie d'un dispositif selon un troisième mode de réalisation de l'invention,
[Fig. 11] est une vue en coupe d'une partie d'un dispositif selon un quatrième mode de réalisation de l'invention,
[Fig. 12] est une vue en coupe d'une partie d'un dispositif selon un quatrième mode de réalisation de l'invention,
[Fig. 13] est une vue en coupe d'une partie d'un dispositif selon un cinquième mode de réalisation de l'invention,
[Fig. 14] est une vue en perspective d'éléments constitutifs d'un même ensemble selon le premier mode de réalisation de l'invention,
[Fig. 15] est une vue en perspective d'éléments constitutifs d'un même ensemble selon le premier mode de réalisation de l'invention,
[Fig. 16] est une vue en perspective d'éléments constitutif d'un ensemble selon un sixième mode de réalisation de l'invention.

### Description détaillée

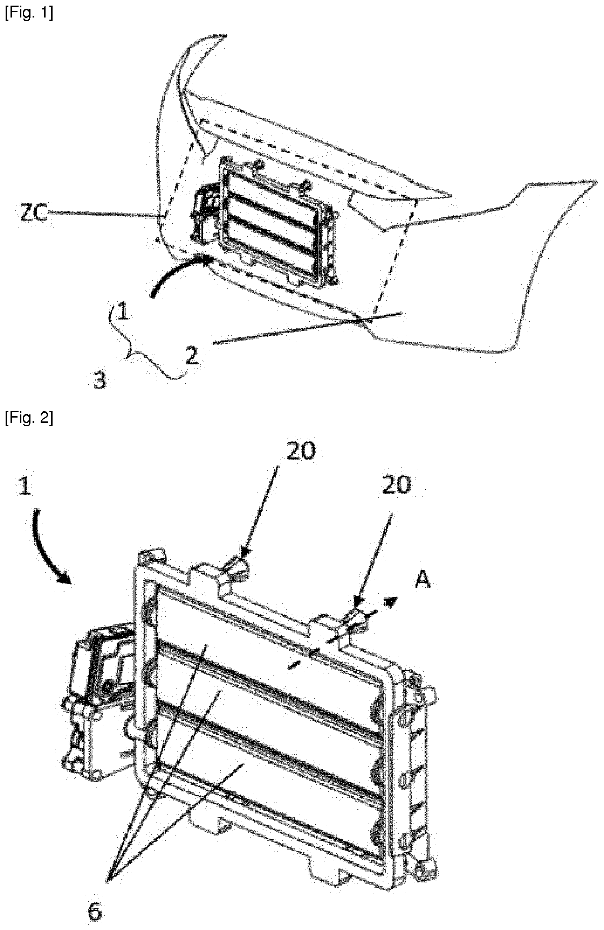

Le dispositif de véhicule automobile 1 selon un mode de réalisation de l'invention est apte à être fixé à une partie immobile du véhicule (non représenté), tout en étant positionné au plus près d'une pièce de carrosserie 2, au sein d'une zone critique ZC pour les chocs piéton et les chocs basse vitesse de cette pièce de carrosserie 2. Par exemple, le dispositif 1 peut être positionné dans une zone critique ZC d'un pare-chocs 2 d'une face avant de véhicule (figure 1).

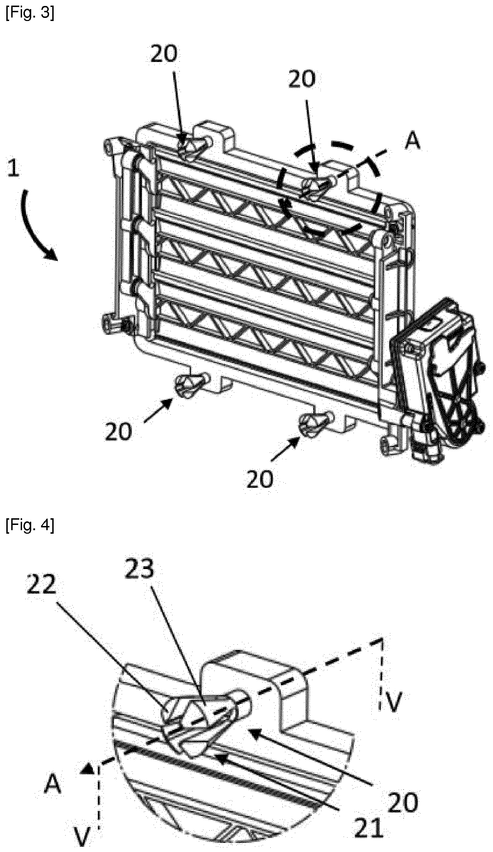

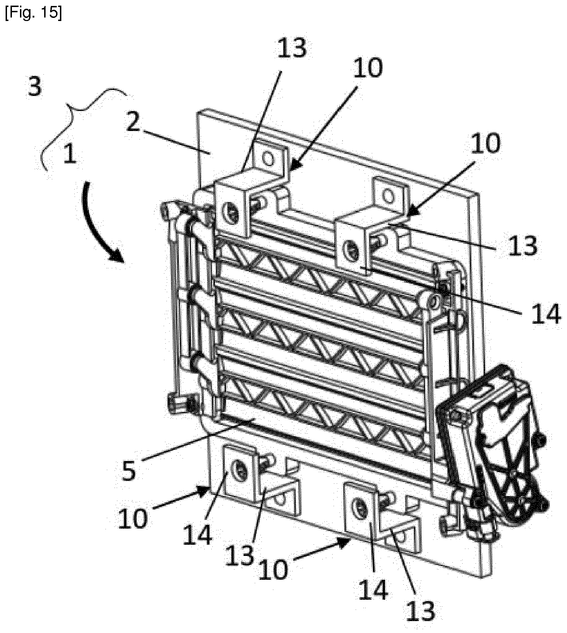

Le dispositif de véhicule 1 de l'invention comprend un système de fixation qui, dans les modes de réalisations représentés aux figures 1 à 3 et 14 à 16, comprend quatre brides de fixation 10, quatre organes de guidage 20, quatre surfaces d'appui 15, 17 ou 40 et quatre parties élastiquement déformables. Bien entendu, le dispositif de l'invention peut comprendre un nombre différent de brides de fixation 10, d'organes de guidage 20, surfaces d'appui 15, 17 ou 40 et de parties élastiquement déformables.

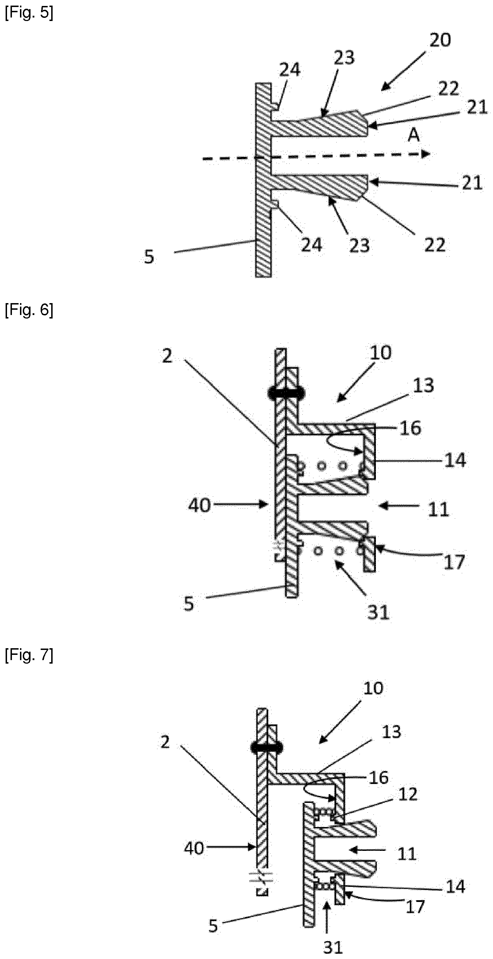

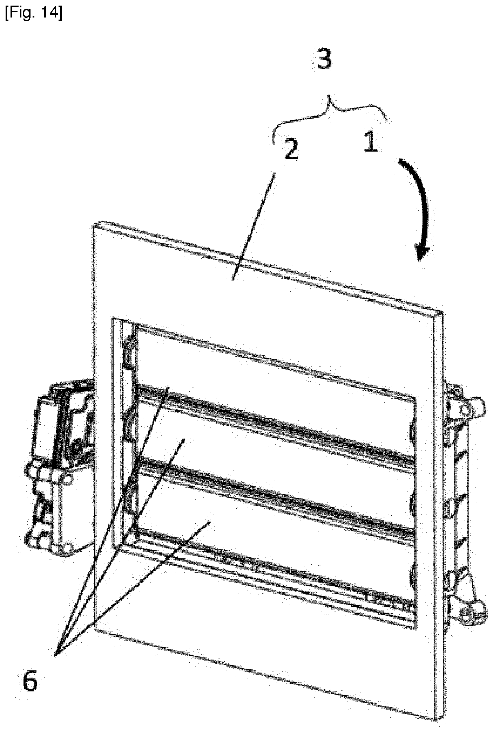

Pour des raisons de lisibilité et de clarté des figures, les parties élastiquement déformables n'ont pas été illustrées sur les figures 14 à 16. Pour ces mêmes raisons, les références relatives à l'organe d'appui 21 et communes aux figures 5 à 13, n'ont été reproduites qu'à la figure 5.

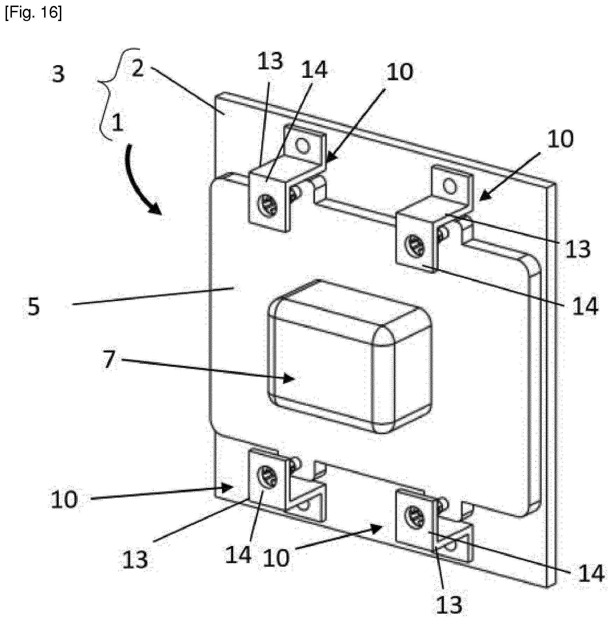

Le dispositif 1 comprend une partie mobile, généralement composée d'un corps principal 5 et des organes de guidage 20. Cette partie du dispositif 1 est qualifiée de mobile car elle est apte être déplacée selon les deux sens d'une direction de déplacement parallèle à l'axe longitudinal A d'un organe de guidage 20. Le corps principal 5 comprend lui-même un ou plusieurs organes fonctionnels du dispositif 1, en l'occurrence des volets aérodynamiques 6 (figures 1 à 3 et 14 à 15) et un radar 7 (figure 16).

Le dispositif 1 comprend également une partie immobile, qui correspond généralement à la partie fixe 13 de chaque bride de fixation 10.

Chaque bride de fixation 10 présente un orifice 11 situé dans une première portion 14 déportée par rapport à la portion de fixation à la pièce de carrosserie 2. Ces différentes portion sont présentes dans la partie fixe 13 de la bride de fixation 10. Une telle partie fixe 13 est agencée pour demeurer dans une position immobile. Dans les modes de réalisation représentés aux figures 6 à 12, la fixation entre une bride de fixation 10 et la pièce de carrosserie 2 est assurée par vissage. Toutefois, toute autre technique connue de l'homme du métier et qui permet d'assurer une fixation solidaire entre ces deux éléments peut être utilisée. La bride de fixation 10 présente une forme en Z, qui lui confère à la fois une forte résistance mécanique et la possibilité de présenter une première portion déportée, dans laquelle est formé l'orifice 11, ainsi qu'une butée de fin de course 12. Bien entendu, la bride de fixation 10 peut présenter toute autre forme adéquate qui remplit l'ensemble des critères mentionnés.

Dans un mode de réalisation non représenté, la bride de fixation peut être fixée à une autre pièce structurelle du véhicule, voire même être une extension d'une telle pièce structurelle. Dans un tel mode de réalisation, la bride de fixation ne présente pas obligatoirement une forme permettant de déporter la première portion présentant l'orifice par rapport à la portion de fixation.

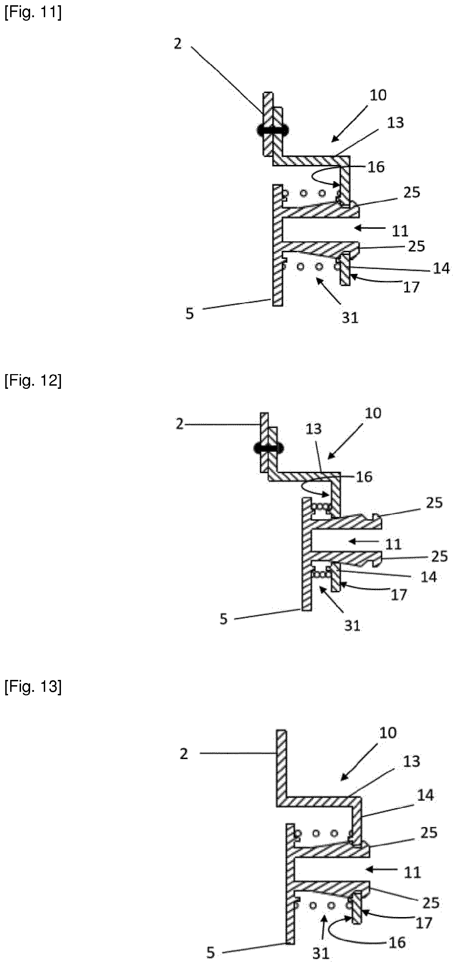

Dans un autre mode de réalisation (figure 13), la bride de fixation 10 et la pièce de carrosserie 2 forment une seule et même pièce. En d'autres termes, c'est la forme conférée à une zone de la pièce de carrosserie 2 qui permet de former la bride de fixation 10. Un tel mode de réalisation présente l'avantage de ne pas requérir d'étape de montage entre la bride de fixation 10 et la pièce de carrosserie 2.

C'est contre la première face 16 de la première portion 14 de la bride de fixation 10, dans laquelle est présent l'orifice 11, que les organes d'appui 21 d'un organe de guidage 20 prennent appui, lorsque le dispositif 1 est dans la première position (figures 6, 8, 10, 11 et 13). Chaque organe de guidage 20 comprend quatre organes d'appui 21 qui comprennent chacun un chanfrein 22 permettant de favoriser le glissement des organes d'appui 21 dans l'orifice 11, puis leur pénétration au sein de ce dernier. L'angle du chanfrein 22 est dimensionné pour assurer, en combinaison avec les propriétés de raideur de la partie élastiquement déformable et la position de la surface d'appui 15, 17 ou 40, un maintien de l'organe de guidage 20 contre la première portion 14, lorsque le dispositif doit rester dans la première position.

Chaque organe de guidage 20 comprend également des portions étrécies 23 formées le long de l'axe A, depuis les organes d'appui 21 vers le corps principal 5. Un tel dimensionnement de ces portions étrécies 23 permet de faciliter la maitrise du rappel de la partie mobile du dispositif 1, lorsque les organes d'appui 21 ont pénétré dans l'orifice 11, après que le véhicule ait subi un choc piéton ou un choc à basse vitesse. En effet, lorsque l'organe de guidage 20 se trouve dans une position différente de la première position, par exemple une position proche de la position de fin de course (figure 7, 9 et 12), et que l'intensité de la force subie par le dispositif 1 devient inférieure à l'intensité de la force de rappel de la partie élastiquement déformable, cette dernière engendre alors un déplacement dans le sens contraire de l'organe de guidage 20, vers la première position. Cette force de rappel est compensée localement par des forces de direction opposée, ces forces étant dues aux frottements entre les portions étrécies 23 et la paroi de la première portion 14 délimitant l'orifice 11. Compte tenu de la forme étrécie de ces portions 23 de l'organe de guidage 20, l'intensité des forces locales de frottement augmente au fur et à mesure que l'organe de guidage 20 est rappelé vers la première position. Cela permet de maitriser avec plus de précision le retour de l'organe de guidage 20, et par extension le retour de la partie mobile du dispositif 1, dans la première position (figures 6, 8, 10, 11 et 13). Un tel retour précisément maitrisé permet *in fine* de préserver l'intégrité du dispositif 1 et donc d'augmenter sa durée de vie au sein du véhicule.

Dans tous les modes de réalisation représentés sur l'ensemble des figures, les organes de guidage 20 sont reliés d'un seul tenant au corps principal 5. Pour ce faire, les organes de guidage 20 et le corps principal 5 peuvent être formés en tant qu'une seule et même pièce, par exemple, issue de moulage. Toutefois, il est également possible de former les organes de guidage 20 et le corps principal 5 indépendamment les uns des autres, puis de les assembler solidairement par la suite.

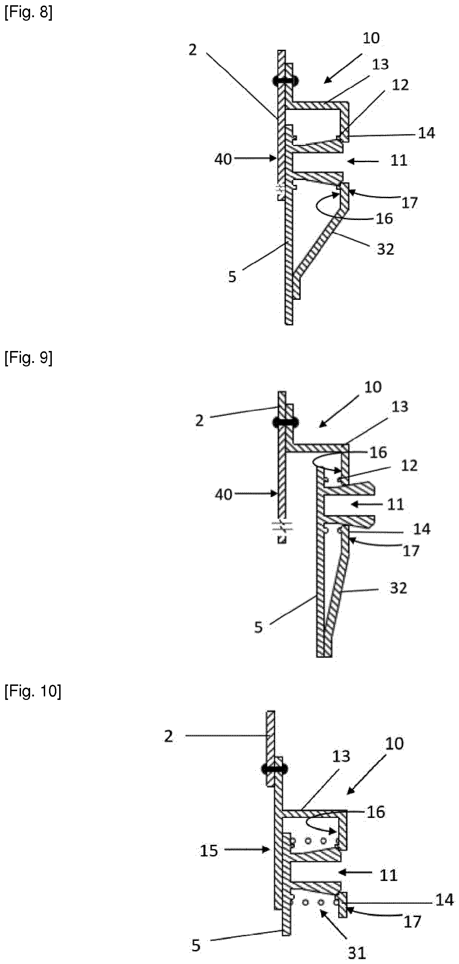

La partie élastiquement déformable peut comprendre un ressort 31 (figures 6, 7, 10 à 13) ou une patte 32 élastiquement déformable de la bride de fixation 10 (figures 8 et 9). Dans les modes de réalisation dans lesquels la partie élastiquement déformable du dispositif 1 comprend un ressort 31, ce dernier peut être précontraint afin de limiter d'éventuels mouvements du dispositif 1, lorsque ce dernier est dans la première position, causés par les efforts aérodynamiques subis par le véhicule en cours de roulage. Dans les modes de réalisation dans lesquels la partie élastiquement déformable du dispositif 1 comprend une patte 32, cette dernière est agencée pour exercer des efforts sur le corps principal 5 de sorte à participer au maintien de l'organe de guidage 20 dans la première position. Lorsque l'intensité des différentes forces subies par le dispositif 1 dépasse la valeur seuil prédéterminée, la patte 32 est déformée par le mouvement de la partie mobile du dispositif 1. Ainsi, la patte 32 glisse le long du corps principal 5 (figure 9), accompagnant le mouvement de la partie mobile du dispositif 1 jusqu'à au maximum la position de fin de course.

Dans les différents modes de réalisation illustrés sur les figures 6 à 9 et 14 à 16, la partie mobile du dispositif 1 prend appui directement sur la portion 40 de la pièce de carrosserie formant surface d'appui, lorsque le dispositif 1 est dans la première position. Ainsi, une telle configuration permet une meilleure répartition des forces aérodynamiques et vibratoires exercées en cours de roulage, ce qui permet, *in fine,* de contribuer à l'immobilité de la partie mobile du dispositif 1 dans la première position. Dans le mode de réalisation représenté à la figure 10, la bride de fixation 10 comprend, au sein de sa partie fixe 13, une extension 15 formant surface d'appui, située en regard de la première face de la première portion 14 présentant l'orifice 11, contre laquelle est maintenu l'organe de guidage 20, lorsque celui-ci se trouve dans la première position. Autrement dit, la partie fixe 13 de la bride de fixation 10 présente une forme en U adéquate pour maintenir le dispositif 1 dans la première position lorsqu'un tel maintien est requis. Cela permet notamment de s'affranchir d'un endommagement de la pièce de carrosserie 2, à la suite d'un choc, qui ne permettrait plus de maintenir convenablement le dispositif 1 dans la première position.

Dans les modes de réalisation représentés aux figures 11 à 13, le dispositif 1 comprend des organes de clippage 25 à une deuxième face 17 de la première portion 14, cette deuxième face 17 formant surface d'appui. Ces organes de clippage 25 participent au maintien de la partie mobile du dispositif 1 dans la première position. Dans de tels modes de réalisation, il n'est plus nécessaire qu'une surface d'appui du type située en regard de la première face 16 soit présente. En effet, les organes de clippage 25 s'étendent chacun, selon l'axe Ade l'organe de guidage 20, depuis un organe d'appui 21 et viennent en appui sur la deuxième face 17 de la première portion 14, qui est une face opposée à la première face 16 contre laquelle reposent les organes d'appui 21 dans la première position. Ce faisant, les organes de clippage 25 et la partie élastiquement déformable sont dimensionnés afin de positionner le corps principal 5 du dispositif 1 dans la position adéquate par rapport à la pièce de carrosserie 2. Dans ces modes de réalisation, le corps principal 5 du dispositif 1 a été positionné avec un léger retrait par rapport à la surface de la pièce de carrosserie 2. Ainsi, il est possible de positionner le dispositif 1 dans une zone critique ZC tout en le prémunissant contre un choc direct. Bien qu'une surface d'appui 14 ou 40 du type située en regard de la première face 16 ne soit pas nécessaire au bon fonctionnement du dispositif 1 selon ce mode de réalisation, elle peut néanmoins être présente selon l'une des variantes précédemment décrites, afin de participer à un maintien davantage sécurisé de la partie mobile du dispositif 1. En effet, dans le cas d'un endommagement de l'organe de clippage 25, la présence d'une telle surface d'appui 15 ou 40 de ce type permet d'assurer le bon fonctionnement du dispositif, et ce, malgré un tel endommagement.

Le dispositif 1 et l'ensemble 3 de l'invention fonctionnent comme suit.

Le dispositif 1 est monté au sein d'une zone critique ZC du véhicule, au plus près d'une pièce de carrosserie 2, cette pièce de carrosserie 2 pouvant être un pare-chocs, un ouvrant, une calandre, *etc.*

Lorsque la pièce de carrosserie 2 subit un choc qui implique une force subie par le dispositif 1 ayant une intensité supérieure à une valeur seuil et une direction sensiblement parallèle à l'axe A de l'organe de guidage 20, les organes d'appui 21 glissent dans l'orifice 11 et y pénètrent. S'en suit un déplacement généralisé de l'ensemble de la partie mobile du dispositif 1, jusqu'à atteindre, au maximum, la position de fin de course, dans laquelle la buté de fin de course 12 de la bride de fixation 10 et la butée de fin de course 24 de l'organe de guidage 20 se rencontrent.

Ce déplacement de la partie mobile du dispositif 1 implique la compression de la partie élastiquement déformable du dispositif 1. Lorsque l'intensité de la force de rappel de la partie élastiquement déformable devient supérieure à l'intensité de la force subie par le dispositif 1, un déplacement de la partie mobile du dispositif 1, dans le sens contraire, est amorcé. Ce déplacement est maitrisé, notamment grâce aux frottements entre les portions étrécies 23 de l'organe de guidage 20 et la paroi de la bride de fixation 10 délimitant l'orifice 11, et abouti au retour du dispositif 1 dans la première position.

### Liste des références

- 1: : dispositif de véhicule
- 2: : pièce de carrosserie
- 3: : ensemble d'une pièce de carrosserie et d'un dispositif de véhicule
- 5: : corps principal
- 6: : volet aérodynamique
- 7: : radar
- 10: : bride de fixation
- 11: : orifice
- 12: : butée de fin de course de la bride de fixation
- 13: : partie fixe de la bride de fixation
- 14: : première portion de la bride de fixation
- 15: : extension de la bride de fixation formant surface d'appui
- 16: : première face de la première portion
- 17: : deuxième face de la première portion formant surface d'appui
- 20: : organe de guidage
- 21: : organe d'appui
- 22: : chanfrein
- 23: : portion étrécie
- 24: : butée de fin de course de l'organe de guidage
- 25: : organe de clippage
- 31: : ressort
- 32: : patte de la bride de fixation
- 40: : portion de la pièce de carrosserie formant surface d'appui
- A: : axe de l'organe de guidage
- ZC: : zone critique pour les chocs piétons et les chocs basse vitesse

## Revendications

1. Dispositif de véhicule automobile (1) comprenant un système de fixation à une pièce (2) du véhicule automobile, **caractérisé en ce que** le système de fixation comprend :
- au moins une bride de fixation (10), la bride de fixation (10) comprenant une première portion (14) présentant au moins un orifice (11),
- au moins un organe de guidage (20) faisant saillie en regard de l'orifice (11) selon un axe (A) sensiblement orthogonal à ladite première portion (14), l'organe de guidage (20) comprenant au moins un organe d'appui (21) contre une première face (16) de ladite première portion (14) participant au maintien de l'organe de guidage (20) dans une première position, l'organe d'appui (21) étant apte à pénétrer dans l'orifice (11) lorsqu'une force subie par le dispositif (1) a une intensité supérieure à une valeur seuil, la force ayant une direction sensiblement parallèle à l'axe (A),
- au moins une surface d'appui (15 ; 17; 40) participant au maintien de l'organe de guidage (20) dans ladite première position,
- au moins une partie élastiquement déformable (31, 32) exerçant une force de rappel apte à rappeler l'organe de guidage (20) dans ladite première position.

2. Dispositif (1) selon la revendication 1, dans lequel la surface d'appui (15; 40) est en regard de ladite première face (16).

3. Dispositif (1) selon la revendication 1 ou 2, dans lequel la surface d'appui est une deuxième face (17) de ladite première portion (14), le dispositif (1) comprenant au moins un organe de clippage (25) à la deuxième face (17) participant au maintien de l'organe de guidage (20) dans ladite première position.

4. Dispositif (1) selon l'une quelconque des revendications précédentes, dans lequel l'organe d'appui (21) comprend au moins un chanfrein (22).

5. Dispositif (1) selon l'une quelconque des revendications précédentes, comprenant au moins une butée de fin de course (12, 24) de l'organe de guidage (20).

6. Dispositif (1) selon l'une quelconque des revendications précédentes, dans lequel l'organe de guidage (20) comprend au moins une portion étrécie (23) depuis l'organe d'appui (21).

7. Dispositif (1) selon l'une quelconque des revendications précédentes, dans lequel la partie élastiquement déformable (31, 32) comprend un ressort (31).

8. Dispositif (1) selon l'une quelconque des revendications précédentes, dans lequel la partie élastiquement déformable (31, 32) comprend une patte (32) de la bride de fixation (10).

9. Dispositif (1) selon l'une quelconque des revendications précédentes, comprenant un capteur apte à détecter un retour de l'organe de guidage (20) dans la première position.

10. Ensemble (3) d'une pièce de carrosserie (2) et d'un dispositif de véhicule automobile (1) selon l'une des revendications précédentes, dans lequel la surface d'appui (15 ; 17 ; 40) est une portion (40) de la surface de la pièce de carrosserie (2) située en regard de la première portion (14) de la bride de fixation (10).

11. Ensemble (3) selon la revendication précédente, dans lequel la bride de fixation (10) est solidaire de la pièce de carrosserie (2).

12. Ensemble (3) selon la revendication 10 ou 11, dans lequel la pièce de carrosserie (2) est une pièce structurelle (2) de véhicule automobile, la pièce structurelle (2) étant de préférence choisie parmi la liste constituée de : un pare-chocs, un ouvrant, une calandre.

## Patentansprüche

1. Kraftfahrzeugvorrichtung (1) mit einem System zur Befestigung an einem Teil (2) des Kraftfahrzeugs, **dadurch gekennzeichnet, dass** das Befestigungssystem aufweist:
- mindestens einen Befestigungsflansch (10), wobei der Befestigungsflansch (10) einen ersten Abschnitt (14) mit mindestens einer Öffnung (11) aufweist,
- mindestens ein Führungselement (20), das gegenüber der Öffnung (11) entlang einer Achse (A) im Wesentlichen orthogonal zu dem ersten Abschnitt (14) vorsteht, wobei das Führungselement (20) mindestens ein Stützelement (21) gegen eine erste Fläche (16) des ersten Abschnitts (14) aufweist, das am Halten des Führungselements (20) in einer ersten Position beteiligt ist wobei das Stützelement (21) eingerichtet ist, in die Öffnung (11) einzudringen, wenn eine auf die Vorrichtung (1) einwirkende Kraft eine Intensität hat, die größer als ein Schwellenwert ist, wobei die Kraft eine Richtung hat, die im Wesentlichen parallel zur Achse (A) ist,
- mindestens eine Auflagefläche (15; 17; 40), die am Halten des Führungselements (20) in der ersten Position beteiligt ist,
- mindestens ein elastisch verformbares Teil (31, 32), das eine Rückstellkraft ausübt, die in der Lage ist, das Führungselement (20) in die erste Position zurückzubringen.

2. Vorrichtung (1) nach Anspruch 1, bei der die Auflagefläche (15; 40) der genannten ersten Fläche (16) gegenüberliegt.

3. Vorrichtung (1) nach Anspruch 1 oder 2, bei der die Auflagefläche eine zweite Fläche (17) des ersten Abschnitts (14) ist, wobei die Vorrichtung (1) mindestens ein Klemmelement (25) an der zweiten Fläche (17) aufweist, das am Halten des Führungselements (20) in der ersten Position beteiligt ist.

4. Vorrichtung (1) nach einem der vorhergehenden Ansprüche, wobei das Stützelement (21) mindestens eine Fase (22) aufweist.

5. Vorrichtung (1) nach einem der vorhergehenden Ansprüche, aufweisend mindestens einen Endanschlag (12, 24) des Führungselements (20).

6. Vorrichtung (1) nach einem der vorhergehenden Ansprüche, wobei das Führungselement (20) mindestens einen sich vom Stützelement (21) verjüngenden Abschnitt (23) aufweist.

7. Vorrichtung (1) nach einem der vorhergehenden Ansprüche, wobei der elastisch verformbare Abschnitt (31, 32) eine Feder (31) aufweist.

8. Vorrichtung (1) nach einem der vorhergehenden Ansprüche, wobei der elastisch verformbare Abschnitt (31, 32) eine Lasche (32) des Befestigungsflansches (10) aufweist.

9. Vorrichtung (1) nach einem der vorhergehenden Ansprüche, mit einem Sensor, der geeignet ist, eine Rückkehr des Führungselements (20) in die erste Position zu erfassen.

10. Anordnung (3) aus einem Karosserieteil (2) und einer Kraftfahrzeugvorrichtung (1) nach einem der vorhergehenden Ansprüche, bei der die Auflagefläche (15; 17; 40) ein dem ersten Abschnitt (14) des Befestigungsflansches (10) gegenüberliegender Abschnitt (40) der Oberfläche des Karosserieteils (2) ist.

11. Anordnung (3) nach dem vorhergehenden Anspruch, wobei der Befestigungsflansch (10) einstückig mit dem Karosserieteil (2) ausgebildet ist.

12. Anordnung (3) nach Anspruch 10 oder 11, wobei das Karosserieteil (2) ein Strukturteil (2) eines Kraftfahrzeugs ist, wobei das Strukturteil (2) vorzugsweise ausgewählt ist aus: einem Stoßfänger, einem Flügel, einem Kühlergrill.

## Claims

1. Motor vehicle device (1) comprising an attachment system to a part (2) of the motor vehicle, **characterized in that** the attachment system comprises :
- at least one mounting flange (10), the mounting flange (10) comprising a first portion (14) having at least one orifice (11),
- at least one guide member (20) projecting opposite the orifice (11) along an axis (A) substantially orthogonal to the said first portion (14), the guide member (20) comprising at least one support member (21) against a first face (16) of the said first portion (14), helping to hold the guide member (20) in a first position, the support member (21) being able to penetrate into the orifice (11) when a force experienced by the device (1) has an intensity greater than a threshold value, the force having a direction substantially parallel to the axis (A),
- at least one bearing surface (15; 17; 40) which helps to hold the guide member (20) in said first position,
- at least one elastically deformable part (31, 32) exerting a return force capable of returning the guide member (20) to said first position.

2. A device (1) according to claim 1, wherein the bearing surface (15; 40) is opposite said first face (16).

3. Device (1) according to claim 1 or 2, wherein the bearing surface is a second face (17) of said first portion (14), the device (1) comprising at least one clipping member (25) at the second face (17) participating in holding the guide member (20) in said first position.

4. A device (1) according to any of the preceding claims, wherein the support member (21) comprises at least one chamfer (22).

5. A device (1) according to any of the preceding claims, comprising at least one end stop (12, 24) of the guide member (20).

6. A device (1) according to any of the preceding claims, wherein the guide member (20) comprises at least one tapered portion (23) from the support member (21).

7. A device (1) according to any of the preceding claims, wherein the elastically deformable part (31, 32) comprises a spring (31).

8. A device (1) according to any of the preceding claims, wherein the elastically deformable part (31, 32) comprises a tab (32) of the mounting flange (10).

9. A device (1) according to any of the preceding claims, comprising a sensor adapted to detect a return of the guide member (20) to the first position.

10. An assembly (3) of a body part (2) and a motor vehicle device (1) according to one of the preceding claims, wherein the bearing surface (15; 17; 40) is a portion (40) of the surface of the body part (2) located opposite the first portion (14) of the mounting flange (10).

11. Assembly (3) according to the preceding claim, in which the mounting flange (10) is integral with the body part (2).

12. An assembly (3) according to claim 10 or 11, wherein the body part (2) is a structural part (2) of a motor vehicle, the structural part (2) preferably being selected from the list consisting of: a bumper, a door, a grille.
